Europäisches Patentamt

European Patent Office

Office européen des brevets

(11) Veröffentlichungsnummer: **0 483 591 A2**

# EUROPÄISCHE PATENTANMELDUNG

(21) Anmeldenummer: **91117564.4**

(22) Anmeldetag: **15.10.91**

(51) Int. Cl.5: **H02H 3/093**, H01H 51/22

(30) Priorität: **30.10.90 DE 4034485**

(43) Veröffentlichungstag der Anmeldung:
**06.05.92 Patentblatt 92/19**

(84) Benannte Vertragsstaaten:
**AT BE CH DE DK ES FR GB GR IT LI LU NL SE**

(71) Anmelder: **Grundmann, Ernst H.**
**Am Sportplatz 36a**
**W-4005 Meerbusch 2(DE)**

(72) Erfinder: **Grundmann, Ernst H.**
**Am Sportplatz 36a**
**W-4005 Meerbusch 2(DE)**

(74) Vertreter: **von Rohr, Hans Wilhelm, Dipl.-Phys.**
**et al**
**Patentanwälte Gesthuysen & von Rohr**
**Huyssenallee 100 Postfach 10 13 33**
**W-4300 Essen 1(DE)**

(54) **Niederspannungsschaltgerät.**

(57) Ein Niederspannungsschaltgerät mit einem ein- oder mehrpoligen Kontaktsystem (1) mit einer entsprechenden Anzahl von Festkontakten (2) und beweglichen Kontakten (3), einem die beweglichen Kontakte (3) bewegenden Magnetanker (4), mindestens einer gleichstromerregten Magnetspule (5) und einem Sollschaltauslöser (9), wobei der Magnetanker (4) bistabil arbeitet und in der jeweils erreichten Schaltstellung verharrt wird dadurch universell einsetzbar und gewinnt Sicherungscharakter, daß eine Überstromschutzschaltung (13) vorgesehen und mittels der Überstromschutzschaltung (13) bei Auftreten eines Überstromes auf mindestens einem geschalteten Pol (12), der jedoch unterhalb eines Grenz-Überstromes liegt, nach einer bestimmten Verzögerungszeit und bei Auftreten eines den Grenz-Überstrom erreichenden oder überschreitenden Stromes auf mindestens einem geschalteten Pol (12) mit der minimal möglichen zeitlich Verzögerung eine Gleichstromerregung der Magnetspule (5) in der zum Erreichen der Ausschaltstellung des Magnetankers (4) notwendigen Stromflußrichtung erfolgt.

Fig.1

Rank Xerox (UK) Business Services
(+/2.17/2.1)

Die Erfindung betrifft ein Niederspannungsschaltgerät mit den Merkmalen des Oberbegriffs von Anspruch 1.

Das bekannte Niederspannungsschaltgerät, von dem die Erfindung ausgeht (DE-A 3 940 242) ist für Niederspannungen im Bereich 110 Volt, 220 Volt, 380 Volt geeignet und kann, je nach Ausstattung, Nennströme von einigen Ampere bis 20 A und mehr schalten. Wenn dieses Niederspannungsschaltgerät mit einer entsprechenden Lichtbogen-Löscheinrichtung am Kontaktsystem ausgerüstet wird, können auch noch größere Ströme geschaltet werden.

Das bekannte Niederspannungsschaltgerät ist insbesondere zum Schalten mehrpoliger Kontaktsysteme, beispielsweise aller drei Phasen eines dreiphasigen Wechselspannungsnetzes geeignet. Die beweglichen Kontakte des Kontaktsystems werden dabei durch den von einer oder zwei Magnetspulen, die ihrerseits primär gleichstromerregt sind, bewegten Magnetanker bewegt. Der Magnetanker ist als Dauermagnetanker aus einem oder mehreren gleich gepolten oder entgegengesetzt gepolten Dauermagneten ausgeführt. In verschiedenen Ausführungsformen werden bei diesem Niederspannungsschaltgerät monostabile oder bistabile Lösungen mit einer oder zwei Magnetspulen und einem oder zwei Dauermagneten im Magnetanker erläutert. Dort ist im einzelnen dargelegt, wie der Magnetanker durch die Wirkung der Dauermagnete in einer von zwei Schaltstellungen jeweils gehalten werden kann. Als Alternative zu einer Haltung durch Magnetkraft wird auch eine einrastende Haltung durch mechanische Elemente beschrieben. Beschrieben wird auch, daß dem Magnetanker ein Magnetjoch in Topfform zugeordnet sein kann, um die Schaltgeschwindigkeit des Schaltgerätes zu erhöhen.

Bei dem aus dem Stand der Technik bekannten Niederspannungsschaltgerät, von dem die Erfindung ausgeht, sind die beweglichen Kontakte als Kontaktbrücken, die jeweils zwei zugehörige Festkontakte überbrücken, ausgeführt. Das bedeutet nicht, daß im Rahmen der Lehre der Erfindung die beweglichen Kontakte nicht auch als einseitig öffnende Kontakthebel od. dgl. ausgeführt sein könnten. Grundsätzlich gilt im übrigen auch, daß die beweglichen Kontakte des Kontaktsystems nicht nur vom Magnetanker, sondern, bei feststehendem Magnetanker, auch von einer beweglichen Magnetspule bewegt werden könnten. Das ist aber in der Praxis wohl eher die Aussnahme und wird im folgenden folglich nicht weiter im einzelnen erläutert. Diese kinematische Umkehr gehört aber in jedem Fall zur Lehre der Erfindung.

Bei dem aus dem Stand der Technik bekannten Niederspannungsschaltgerät, das vorerläutert worden ist, ist über die Ansteuerung der Magnetspule bzw. der Magnetspulen nichts ausgeführt. Aus sonstigem Stand der Technik ist es bekannt, Niederspannungsschaltgeräte der in Rede stehenden Art beispielsweise mit Überstromauslösern zu versehen (DE-A 3 304 921).

Generell waren bisher Niederspannungsschaltgeräte der grundsätzlich vorliegenden Art in unterschiedliche Schaltgerätegruppen unterteilt.

Zunächst kennt man Niederspannungs-Sicherungslasttrenner und Niederspannungs-Sicherungslastschalter, bei denen zum Schutz gegen Überlaststrom und Kurzschlußstrom Sicherungseinsätze verwendet werden. Eine entsprechende Kennlinie mit Schaltzeit in Abhängigkeit von der Größe des fließenden Stromes bezüglich der Abschaltung gewährleistet, daß keine Schäden auftreten können. Nach jeder Auslösung des Überlast- und Kurzschlußschutzes muß aber der Sicherungseinsatz erneuert werden. Regelmäßig erfolgt das Ein- und Ausschalten von Hand, eine Fernbetätigung ist nicht vorgesehen. Da, beispielsweise in einem dreiphasigen Netz, auch nur der Sicherungseinsatz einer geschalteten Phase ansprechen kann, muß man in manchen Fällen, beispielsweise um einen Zweiphasenlauf eines angeschalteten Drehstrommotors zu vermeiden, eine zusätzliche Überwachung vorsehen. Schließlich besteht die Gefahr des Einschaltens auf Kurzschluß, wobei die Einschaltgeschwindigkeit von der Betätigung von Hand abhängig ist.

Als für relativ hohe Nennströme geeignete Niederspannungsschaltgeräte sind Schütze hervorragend geeignet für hohe Schaltzahlen. Einem Schütz müßten allerdings für Überströme und Kurzschlußströme entsprechende Sicherungen vorgeschaltet werden. Eine mechanische Abschaltung eines angezogenen Schützes ist im übrigen nicht möglich, da der Schütz-Solenoid während der Einschaltdauer erregt sein muß.

Schließlich sind Niederspannungs-Leistungsschalter bekannt, bei denen regelmäßig eine Auslösung für Überstrom und Kurzschlußstrom vorgesehen ist. Dieser erfolgt mechanisch über ein Schloß, das Ausschaltfedern freigibt, mitunter sind metallische Vorabreißer zugeordnet, die eine Unterbrechung des Stromkreises nach kurzer Zeit hervorrufen und somit eine Begrenzung des Kurzschlußstroms (Nichterreichen des Strom-Scheitelwertes) gewährleisten, bevor das Kontaktsystem mittels des Schlosses ganz geöffnet ist. Für Leistungsschalter sind hohe Schaltzahlen wie bei einem Schütz meist nicht realisierbar.

Der Erfindung liegt nun die Aufgabe zugrunde, ein Niederspannungsschaltgerät der eingangs angesprochenen Art anzugeben, das die Funktionen eines Schützes mit den Funktionen eines Sicherungslastschalters verbindet, insbesondere also eine rechtzeitige Überstromauslösung und eine sofortige Kurzschlußstromauslösung auf konstruktiv möglichst einfache Weise beinhaltet.

Das beanspruchte Niederspannungsschaltgerät, bei dem die zuvor aufgezeigte Aufgabe gelöst ist, wird weiter durch die Merkmale des kennzeichnenden Teils von Anspruch 1 beschrieben. Wesentlich ist, daß dem mit Magnetanker und Magnetspule ausgerüsteten Niederspannungsschaltgerät eine Überstromschutzschaltung zugeordnet ist, die eine ganz bestimmte, im Anspruch 1 im kennzeichnenden Teil beschriebene Funktionsweise aufweist. Dadurch ist gewährleistet, daß ab einem Strom, der mit einer bestimmten Sicherheitsmarge oberhalb des Nennstroms liegt, eine Überstromfunktion eintritt, die nach einer bestimmten Verzögerungszeit zur Abschaltung führt. Demgegenüber ist weiter sichergestellt, daß ein Überschreiten eines Grenz-Überstroms zu einer sofortigen Kurzschlußstrom-Abschaltung führt. Von besonderer Bedeutung ist dabei die Ausgestaltung mit einer in Abhängigkeit von der Größe des Überstroms gesteuerten Verzögerungszeit, durch die die Abschaltung desto schneller erfolgt, je weiter der fließende Strom den Nennstrom überschreitet (Anspruch 2).

Weiter bevorzugte Ausgestaltungen und Weiterbildungen der Erfindung sind Gegenstand der Unteransprüche.

Das erfindungsgemäße Niederspannungsschaltgerät nutzt also zunächst die aus dem gattungsbildenden Stand der Technik bekannte Konzeption, daß die Magnetspule - im Gegensatz zum Schütz - nur beim Schalten gleichstromerregt ist, während sie in den beiden Ruhelagen stromlos bleibt. Die Magnetspule kann daher für Kurzzeitbetrieb ausgelegt werden. Bei Ausbildung des Magnetankers als Dauermagnet ist zum Umschalten eine Umpolung erforderlich.

Während bei dem erfindungsgemäßen Niederspannungsschaltgerät die normale Einschaltung und Ausschaltung über vorzugsweise gegeneinander verriegelte, insbesondere elektronisch verriegelte Schalter oder Drucktaster erfolgt, wird bei Überstrom oder Kurzschlußstrom eine automatische Ausschaltung des Kontaktsystems realisiert, und zwar mit einer Ausschaltzeit, die vom Strom im betroffenen Pol so gesteuert ist, daß sich die Charakteristik einer Sicherungskennlinie ergibt.

Die Schaltspannung für die Magnetspule und die Versorgungsspannung der Überstromschutzschaltung kann man ohne weiteres den geschalteten Polen selbst entnehmen, so daß die Bereitstellung einer separaten Hilfsspannung entfällt.

Aufgrund der zuvor erläuterten Konzeption des Magnetsystems mit nur beim Schalten gleichstromerregter Magnetspule läßt sich das Niederspannungsschaltgerät bei Netzausfall auch von Hand schalten.

Aufgrund der zuvor erläuterten Eigenschaften benötigt das erfindungsgemäße Niederspannungsschaltgerät keine zusätzlichen Überstrom- oder Kurzschlußauslöser. Es kann sowohl als Schütz als auch als Sicherungsschalter als auch, bei Verwendung entsprechender Lichtbogen-Löscheinrichtungen, als Leistungsschalter eingesetzt werden. Aufgrund der nach bevorzugter Lehre realisierbaren Sicherungskennlinie kann ein eventuell zu bewältigender Abschaltstrom im Kurzschlußfall relativ klein gehalten werden. Das Niederspannungsschaltgerät ist also auch ohne Verwendung von zusätzlichen Sicherungen kurzschlußfest und kann universell eingesetzt werden. Einsatzbereiche sind Netzspannungen bis zu mehreren hundert Volt.

Wegen der kombinativen Eigenschaften des erfindungsgemäßen Niederspannungsschaltgerätes kann dieses übliche Kombinationen der weiter oben erläuterten normalen Niederspannungsschaltgeräte ersetzen, beispielsweise eine Kombination Sicherungslasttrenner mit dahinter geschaltetem Schütz, durch welche hohe Schaltzahlen unter Last mit einer Kurzschlußsicherung kombiniert sind, die Kombination eines Leistungsschalters mit dahinter geschaltetem Schütz, die Kombination eines kleineren Leistungsschalters mit vorgeschalteter Sicherung etc.

Im folgenden wird die Erfindung anhand einer Ausführungsbeispiele darstellenden Zeichnung näher erläutert. In der Zeichnung zeigt

Fig. 1 in einem Schaltbild die Schaltungsanordnung eines bevorzugten Ausführungsbeispiels eines erfindungsgemäßen Niederspannungsschaltgerätes, hier für ein Dreiphasen-Wechselspannungsnetz,

Fig. 2 in schematischer Darstellung die elektromechanischen Komponenten eines ersten Ausführungsbeispiels eines erfindungsgemäßen Niederspannungsschaltgerätes und

Fig. 3 in Fig. 2 entsprechender Darstellung die elektromechanischen Komponenten eines zweiten Ausführungsbeispiels.

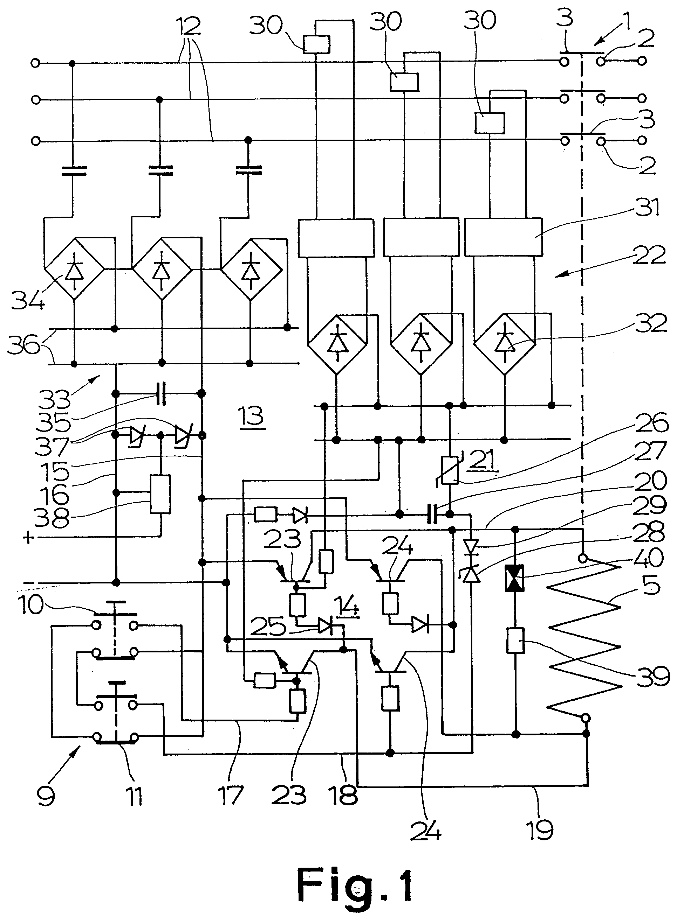

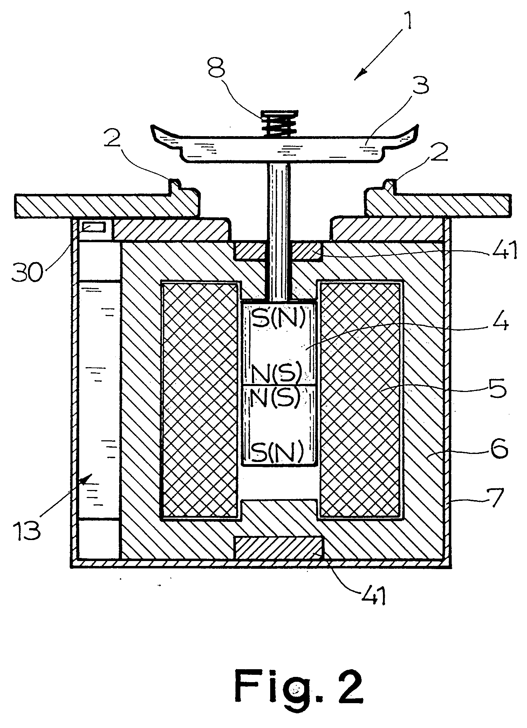

Anhand der Fig. 1 und 2 soll nun ein erstes Ausführungsbeispiel des erfindungsgemäßen Niederspannungsschaltgerätes im einzelnen erläutert werden. Es kann sich hier um ein Niederspannungsschaltgerät für ein Dreiphasen-Wechselspannungsnetz von beispielsweise 380 V für Nennströme von beispielsweise 100 A handeln.

Zunächst ist hier ein mehrpoliges Kontaktsystem 1 mit einer entsprechenden Anzahl von Festkontakten 2 und beweglichen Kontakten 3, die hier und nach bevorzugter Lehre als Kontaktbrücken ausgeführt sind, vorgesehen. Die beweglichen Kontakte 3 werden durch einen Magnetanker 4 bewegt, der von einer gleichstromerregten Magnetspule 5 angetrieben wird. Das bewegliche Teil könnte, wie zuvor schon erläutert, auch die Magnetspule 5 sein, wenn der Magnetanker demgegenüber festgelegt wäre.

Wie aus Fig. 2 erkennbar ist, befinden sich der als Tauchanker ausgeführte Magnetanker 4 und die Magnetspule 5 in einem topfförmigen Magnetjoch 6, das in einem Gehäuse 7 eingesetzt ist. Oben am Magnetanker 4 erkennt man einen beweglichen Kontakt 3 über den beiden Festkontakten 2, der bewegliche Kontakt 3 ausgeführt als Kontaktbrücke unter Belastung einer Andruckfeder 8. Im dargestellten Ausführungsbeispiel ist der Magnetanker 4 als Dauermagnetanker ausgeführt.

Fig. 1 zeigt im übrigen einen Sollschaltauslöser 9 mit einem Drucktaster 10 für Einschaltung und einem Drucktaster 11 für Ausschaltung der geschalteten Pole 12. Der Sollschaltauslöser 9 könnte auch seinerseits wiederum eine elektronische Schaltung beinhalten, wenn man keine Handbetätigung oder jedenfalls nicht nur eine Handbetätigung wünscht.

Hinsichtlich des Aufbaus von Magnetanker 4 und Magnetspule 5 läßt Fig. 2 noch erkennen, daß der Magnetanker 4 bistabil arbeitet, nämlich durch kurzzeitige, vom Sollschaltauslöser ausgelöste Gleichstromerregung der Magnetspule 5 mit einer von zwei möglichen Stromflußrichtungen in eine von zwei Schaltstellungen, nämlich eine Einschaltstellung oder eine Ausschaltstellung bringbar ist. In der jeweils erreichten Schaltstellung verharrt der Magnetanker 4, im hier dargestellten und bevorzugten Ausführungsbeispiel ist er in der jeweils erreichten Schaltstellung aktiv gehalten, im dargestellten Ausführungsbeispiel durch Magnetkraft. Hierzu darf auf verschiedene Ausführungsbeispiele im Stand der Technik verwiesen werden, wo auch mehrere Magnetspulen einem Magnetanker oder mehrere Magnetanker einer Magnetspule zugeordnet sein können.

Fig. 1 zeigt nun, daß das erfindungsgemäße Niederspannungsschaltgerät eine Überstromschutzschaltung 13 aufweist. Überstrom im Sinne der Lehre ist ein Strom einer Größe, die mit einer Sicherheitsmarge oberhalb des Nennstroms des Niederspannungsschaltgerätes liegt, ein ganz erheblicher Überstrom, der einen Grenz-Überstrom erreicht oder überschreitet, wird als Kurzschlußstrom definiert. Mittels der Überstromschutzschaltung 13 erfolgt bei Auftreten eines Überstromes auf mindestens einem geschalteten Pol 12, der jedoch unterhalb eines Grenz-Überstromes liegt, nach einer bestimmten Verzögerungszeit eine Gleichstromerregung der Magnetspule 5 in der zum Erreichen der Ausschaltstellung des Magnetankers 4 notwendigen Stromflußrichtung. Bei Auftreten eines den Grenz-Überstrom erreichenden oder überschreitenden Stromes auf mindestens einem geschalteten Pol 12 erfolgt eine solche Ausschaltung mit der minimal möglichen zeitlichen Verzögerung.

Das dargestellte und insoweit besonders bevorzugte Ausführungsbeispiel zeichnet sich weiter dadurch aus, daß die Verzögerungszeit in Abhängigkeit von der Größe des Überstromes gesteuert wird, und zwar desto kürzer ist, je größer der Überstrom ist. Mit größerem Wert des Überstromes erfolgt also die Abschaltung des geschalteten Pols 12 schneller. Dadurch bleibt die Gesamt-Strombelastung des Niederspannungsschaltgerätes etwa wie bei einer Sicherungskennlinie begrenzt. Beim Abschalten von Kurzschlußstrom wird die minimal mögliche Verzögerung realisiert, die so bemessen sein sollte, daß der Scheitelwert des Kurzschlußstromes nicht erreicht wird (Kurzschlußstrom-Begrenzung). Die minimal mögliche zeitliche Verzögerung sollte bei einem normalen Netz mit 50 bis 60 Hz bei maximal 5 ms, vorzugsweise bei maximal 3 ms liegen.

In der Überstromschutzschaltung 13 ist nun eine elektronische Steuerschaltung 14 vorgesehen, die Schaltspannungsanschlüsse 15, 16, einen Einschalt-Steuereingang17, einen Ausschalt-Steuereingang 18, einen Einschalt-Ausgang 19 und einen Ausschalt-Ausgang 20 aufweist. Die Steuereingänge 17, 18 sind mit dem Sollschaltauslöser 9 verbunden und die Magnetspule 5 ist zwischen die Ausgänge 19, 20 geschaltet. In dem weiter oben angesprochenen möglichen Alternativsystem mit zwei Magnetspulen zum Antrieb eines Magnetankers wären entsprechend die Ausgäng auf jeweils eine Magnetspule geschaltet, deren anderes Ende jeweils an einem Neutralleiter oder Gegenpol liegt. Der Ausschalt-Steuereingang 18 der Steuerschaltung 14 ist im übrigen zusätzlich über ein elektronisches Zeitglied 21 an eine vom Strom auf dem geschalteten Pol 12 bzw. den geschalteten Polen 12 gesteuerte Steuerspannungsquelle 22 angeschlossen. Das Zeitglied 21 ist im in Fig. 1 dargestellten Ausführungsbeispiel einmal für alle geschalteten Pole 12 vorgesehen, es könnte bei mehreren geschalteten Polen 12 auch je Pol separat vorhanden sein. Über das elektronische Zeitglied 21 wird jedenfalls die zuvor erläuterte, erfindungsgemäß wesentliche Verzögerungszeit realisiert. Durch die Verbindung des elektronischen Zeitgliedes 21 mit dem Ausschalt-Steuereingang 18 unabhängig vom Sollschaltauslöser 9 wird die automatische Abschaltung des geschalteten Pols 12 bei Überstrom über eine bestimmte Zeit realisiert. Bei Kurzschlußstrom ist dann die schnellstmögliche Abschaltung möglich.

Im dargestellten Ausführungsbeispiel gilt nun, daß die Steuerschaltung 14 mit elektronischen Leistungs-Schaltelementen ausgerüstet ist. Elektronische Leistungs-Schaltelemente für pulsierende Gleichspannung sind beispielsweise Thyristor oder Triac, im dargestellten und insoweit bevorzugten Ausführungsbeispiel handelt es sich jedoch um Leistungstransistoren 23, 24, und zwar um jeweils komplementär zueinander geschaltete Leistungstransistoren 23 für Einschaltung und 24 für Ausschaltung. Im dargestellten Ausführungsbeispiel ist jeweils ein Leistungstransistor 23 bzw. 24 als npn und der andere als pnp-Transistor ausgeführt. Es sind also hier Bipolar-Transistoren. Im Grundsatz kämen auch Leistungs-MOS-Transistoren in Frage, eine entsprechende Anpassung liegt im Rahmen des üblichen Fachkönnens. Die Schaltung ist im dargestellten Ausführungsbeispiel so getroffen, daß die Ausgänge 19, 20 der Steuerschaltung 14 über jeweils ein Leistungs-Schaltelement 23 bzw. 24 mit jedem der Schaltspannungsanschlüsse 15, 16 schaltungstechnisch verbunden und jeweils zwei einander zugeordnete Leistungs-Schaltelemente 23 bzw. 24 durchgeschaltet und die beiden anderen Leistungs-Schaltelemente 24 bzw. 23 gesperrt sind. Es ergibt sich also eine Art Gegentakt-Ansteuerung der Magnetspule 5 über jeweils beide Anschlüsse schaltende elektronische Schaltelemente.

Im einzelnen ist die Schaltung so aufgebaut, daß der npn-Leistungstransistor 23 für die Einschaltung über einen Basis-Vorwiderstand vom Drucktaster 10 an den positiven Schaltspannungsanschluß 15 geschaltet werden kann. Der dann durchschaltende Leistungstransistor 23 zieht das Kollektor-Potential auf das Potential des negativen Schaltspannungsanschlusses 16, so daß einerseits das entsprechende Ende der Magnetspule 5 hiermit verbunden ist, andererseits über einen Basisvorwiderstand und eine Entkopplungsdiode 25 auch die Basis des pnp-Leistungstransistors 23 negativ gegenüber dem Emitter ist, so daß auch dieser Leistungstransistor 23 durchschaltet und so das andere Ende der Magnetspule 5 mit dem positiven Schaltspannungsanschluß 15 verbindet. Nach dem Loslassen des Drucktasters 10 wird die Magnetspule 5 wieder stromlos, der Magnetanker 4 hat seine Einschaltstellung erreicht. Genau umgekehrt läuft es dann über die Leistungstransistoren 24 für das Ausschalten ab, die im Grundsatz aber in gleicher Weise geschaltet sind. Gleiche Wirkung auf die Leistungstransistoren 24 bzw. die entsprechenden Leistungs-Schaltelemente für Ausschaltung hat die Spannungseinkopplung vom Zeitglied 21 her.

Die zuvor erläuterte konkrete Ausführung der Steuerschaltung 14 hat den Vorteil, daß nur die positive Phase der Leistungstransistoren 23 bz . 24 geschaltet werden muß, während die negative Phase durch Folge-Schaltung des jeweiligen pnp-Leistungstransistors 23 bzw. 24 automatisch mit geschaltet wird. Eine Verriegelung zwischen den Drucktastern 10, 11 verhindert die gleichzeitige Betätigung in Einschalt- und Ausschalt-Richtung.

Im dargestellten Ausführungsbeispiel gemäß Fig. 1 gilt im übrigen, daß das Zeitglied 21 als RC-Glied ausgeführt ist, also einen Verzögerungswiderstand 26 und einen Speicherkondensator 27 aufweist. Ein normales RC-Glied hat eine feste Zeitkonstante, im dargestellten Ausführungsbeispiel gilt nun aber, daß der Verzögerungswiderstand 26 als Varistor (VDR-Widerstand, Voltage Dependent Resistance) ausgeführt ist. Ein Varistor ist ein nichtlineares Bauelement, dessen elektrischer Widerstand bei konstanter Temperatur mit zunehmender Spannung stark abnimmt. Unterhalb einer bestimmten Spannung, der sogenannten Potentialschwelle, ist die Leitfähigkeit sehr gering, steigt die Spannung an, nimmt der Strom rapide zu (Durchbruch-Effekt). Varistoren werden an sich häufig zur Ableitung von Überspannungen eingesetzt. Der Varistor als Verzögerungswiderstand 26 oder als Teil eines Verzögerungswiderstandes 26 hat hier den besonderen Effekt, daß er im elektronischen Zeitglied 21 eine von der Betriebsspannung abhängige Zeitkonstante realisiert. Wächst die Ausgangsspannung der Steuerspannungsquelle 22 mit steigendem Strom auf dem geschalteten Pol 12, so sinkt dadurch, wie gewünscht, die Verzögerungszeit. Das ist ein besonders bevorzugtes Ausführungsbeispiel einer entsprechenden Verzögerungsschaltung.

Im dargestellten Ausführungsbeispiel ist weiter zu erkennen, daß in Reihe zu dem Zeitglied 21, d. h. genau gesagt in Reihe zum Verzögerungswiderstand 26 in einem Zweig, der zum Ausschalt-Steuereingang 18 der Steuerschaltung 14 führt, ein Bauelement mit Spannungs-Schwellwertcharakter, hier und nach bevorzugter Lehre eine Zenerdiode 28 liegt. Die am Speicherkondensator 27 entstehende Spannung wird so dem Ausschalt-Steuereingang 18 erst dann zugeführt, wenn sie eine bestimmte Mindesthöhe erreicht hat, für die die Zenerdiode relevant ist. Dieses Bauelement mit Spannungs-Schwellwertcharakter verhindert eine stromabhängige automatische Ausschaltung des Niederspannungsschaltgerätes bei zu niedrigen Strömen. Weitere Dioden 29 verhindern hier falsche Spannungsverhältnisse, sie wirken als Entkopplungsdioden für eine Arbeitsrichtung.

Das dargestellte und insoweit bevorzugte Ausführungsbeispiel zeichnet sich hinsichtlich der Steuerschaltung 14 weiter noch dadurch aus, daß der Einschalt-Steuereingang 17 ggf. über einen Begrenzungswiderstand an die Steuerspannungsquelle 22, und zwar an deren nicht mit dem Ausschalt-Steuereingang 18 verbundenen Pol, angeschlossen ist. Diese zusätzliche Schaltung führt der Basis des npn-Leistungstransistors 23 für die Einschaltung eine negative Spannung zu, die diesen sicher sperrt, während sie dem pnp-Leistungstransistor 23 für Einschaltung eine positive Basisspannung zuführt, die diesen gleichfalls sperrt. Letzteres geschieht allerdings durch Ankopplung an den Pol der Steuerspannungsquelle 22, der auch mit dem Ausschalt-Steuereingang 18 verbunden ist. Das ist eine zusätzliche schaltungstechnische Sicherungsmaßnahme, die ein sicheres und schnelles Ausschalten im Ansprechfall erlaubt.

Abhängig von der Größe des Überstromes bzw. Kurzschlußstromes kann sich die Zeitkonstante des Zeitgliedes 21 beispielsweise um den Faktor $10^6$ ändern.

Bislang ist noch nicht im einzelnen erläutert worden, wie die Steuerspannungsquelle 22 die eigene Steuerspannung gewinnt. Im dargestellten Ausführungsbeispiel ist dazu vorgesehen, daß, wie es an sich aus anderem Stand der Technik bei generellen Anwendungen bekannt ist, die Steuerspannungsquelle 22 an den geschalteten Polen 12 angeschlossene, vorzugsweise als Hall-Generatoren 30 ausgeführte Stromsensoren sowie Verstärker 31 und ggf. ausgangsseitig Gleichrichter 32 aufweist. Bei den Gleichrichtern 32, die wegen der von den Hall-Generatoren 30 erzeugten und von den Verstärkern 31 verstärkten Wechselspannung erforderlich sind, handelt es sich um übliche Brückengleichrichter, die ausgangsseitig an Sammelschienen angeschlossen sind. Die Schaltungsanordnung, mit der diese Beuelemente ihrerseits mit Betriebsspannung versorgt werden, ist hier nicht dargestellt.

Die in den geschalteten Polen 12 über die Kontakte 2, 3 des Kontaktsystems 1 fließenden Ströme werden mittels der als Hall-Generatoren 30 ausgeführten Stromsensoren in stromproportionale Spannungen umgewandelt, über die Verstärker 31 spannungsverstärkt und dann mit den Gleichrichtern 32 gleichgerichtet. Ausgangsseitig ist dann das eine Zeitglied 21 vorgesehen, wobei, wie zuvor ausgeführt, auch mehrere Zeitglieder vorgesehen sein könnten, dann aber auf die Sammelschienen verzichtet würde.

Von besonderem Vorteil ist bei dem in Fig. 1 dargestellten Niederspannungsschaltgerät, daß dieses keine separate Spannungsversorgung benötigt. Es gilt nämlich, daß die Schaltspannungsanschlüsse 15, 16 zu einer Schaltspannungsquelle 33 gehören, die eingangsseitig, vorzugsweise über Gleichrichter 34, an die geschalteten Pole 12 bzw. den geschalteten Pol und einen Gegenpol, angeschlossen ist und, vorzugsweise, ausgangsseitig einen Speicher- und Glättungskondensator 35 aufweist. Die Schaltspannungsquelle 33 gewinnt die Schaltspannung ausgangsseitig als pulsierende Gleichspannung aus dem hier dreiphasig ausgeführten Netz. Eingangsseitig wird über Begrenzungsglieder, insbesondere die hier dargestellten Kondensatoren, die Spannung von den drei geschalteten Polen 12 in die Schaltspannungsquelle 33 eingekoppelt, hinter den Gleichrichtern 34 auf Sammelschienen 36 gegeben und dem Speicher- und Glättungskondensator 35 zugeführt. In einer Parallelschaltung zu dem Speicher- und Glättungskondensator 35 ist eine Reihenschaltung aus zwei Zenerdioden 37 vorgesehen, durch die eine Spannungsaufteilung erfolgt. Eine höhere Spannung, beispielsweise ca. 100 V, kann als Schaltspannung über die Schaltspannungsanschlüsse 15, 16 bereit gestellt werden, während der Mittelabgriff zwischen den Zenerdioden 37 an eine Konstantspannungsquelle 38 für eine konstante niedrige Spannung von beispielsweis 12 V für die Steuerelektronik bzw. die Speisung der Steuerspannungsquelle 22 angeschlossen ist. Diese Speiseschaltung ist ja weiter nicht dargestellt, man kann aber unschwer nachvollziehen, wie hier die benötigte Spannung aus der Schaltspannungsquelle 33 gewonnen wird.

Im in Fig. 1 dargestellten Ausführungsbeispiel ist weiter noch vorgesehen, daß der Magnetspule 5 eine Überspannungsschaltung, vorzugsweise eine Reihenschaltung aus einem Widerstand 39 und einem Überspannungsableiter 40, parallel geschaltet ist. Um zwischen einer Einschaltung und einer Ausschaltung oder umgekehrt eine Entladung der in der Magnetspule 5 gespeicherten Energie in kürzester Zeit zu erreichen, wird parallel über den Widerstand 39 der Überspannungsableiter 40 wirksam, es handelt sich beim Überspannungsableiter 40 um eine Funkenstrecke, die beim Abschalten der Magnetspule 5 durchschlägt. Eine entsprechende Zeitkonstante wird durch den Widerstand 39 vorgegeben. Zweckmäßigerweise verhindert ein Zeitglied die erneute Ansteuerung der Magnetspule 5 unmittelbar nach einer Einschaltung oder Ausschaltung über die Steuerschaltung 14 so lange, bis die in der Magnetspule 5 gespeicherte Energie nach dem Abschalten über den Überspannungsableiter 40 vernichtet worden ist.

Das in Fig. 2 dargestellte Ausführungsbeispiel hat einen relativ einfachen Aufbau üblicher Art, wie aus dem eingangs genannten Stand der Technik bekannt. Der Magnetanker 4 ist als Dauermagnetanker ausgeführt mit zwei einander zugeordneten Dauermagneten. Damit der Magnetanker 4 bei Stromlosigkeit der Magnetspule 5 in der jeweils vorgesehenen Schaltstellung bleibt, sind an den in Bewegungsrichtung befindlichen Enden jeweils Dauermagnete 41 mit entsprechender Polstellung eingesetzt. In Fig. 2 erkennt man links schematisch angedeutet den Aufnahmeraum für die Überstromschutzschaltung 13.

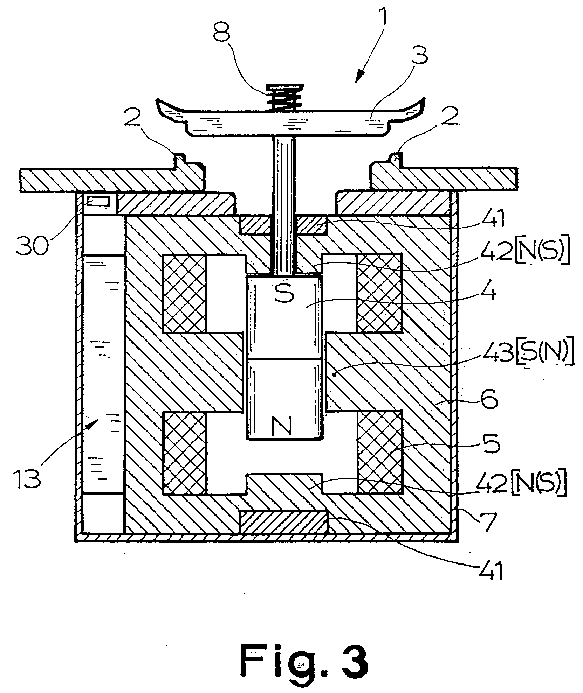

Fig. 3 unterscheidet sich vom Ausführungsbeispiel in Fig. 2 dadurch, daß eine noch verbesserte Ansprechgeschwindigkeit des Magnetankers 4 erreicht wird. Es gilt hier nämlich, daß der Magnetspule 5 ein topfförmiges Magnetjoch 6 zugeordnet und der Magnetanker 4 als Dauermagnet-Tauchanker ausgeführt ist, daß das Magnetjoch 6 zwei Polenden 42 in Bewegungsrichtung des Magnetankers 4 sowie zwei Polenden 43 quer dazu in der Mitte zwischen den beiden anderen Polenden 42 aufweist und daß die in Bewegungsrichtung befindlichen Polenden 42 jeweils gleiche Polarität, die anderen Polenden 43 jeweils den in Bewegungsrichtung befindlichen Polenden 42 entgegengerichtete Polarität aufweisen. Ganz besonders mit dieser Ausgestaltung ist eine kurze Schaltzeit zu erreichen, die für die Begrenzung des Kurzschlußstroms beim Ausschalten bzw. beim Einschalten auf Kurzschluß erforderlich ist.

Nicht dargestellt ist in der Schaltung, daß es zweckmäßig ist, wenn hinter den Netzgleichrichtern ein besonders leistungsstarker elektrischer Speicher vorgesehen ist, der eine einwandfreie Schnellabschaltung auch dann sicherstellt, wenn die Netzschaltung zusammenbricht. Ein Rückfluß der Energie des Netzspeichers kann durch entsprechende Sperrdioden verhindert werden.

Nicht dargestellt ist schließlich auch, daß der Magnetanker 4 auch direkt mechanisch von Hand betätigbar ist und daß das dazu, vorzugsweise, ein im normalen Betrieb mit dem Magnetanker 4 nicht gekuppelter, aber bedarfsweise kuppelbarer Handgriff vorgesehen ist. Dadurch wird die Funktion und die Schaltgeschwindigkeit des Magnetankers 4 im Betrieb nicht behindert, ist gleichwohl eine mechanische Betätigung des Niederspannungsschaltgerätes im Notfall von Hand möglich.

**Patentansprüche**

1. Niederspannungsschaltgerät für einen bestimmten Nennstrom, insbesondere in Wechselspannungsnetzen, mit einem ein- oder mehrpoligen Kontaktsystem (1) mit einer entsprechenden Anzahl von Festkontakten (2) und, insbesondere als Kontaktbrücken ausgeführten beweglichen Kontakten (3), einem die beweglichen Kontakte (3) bewegenden Magnetanker (4), mindestens einer gleichstromerregten Magnetspule (5) und einem Sollschaltauslöser (9), wobei der Magnetanker (4) bistabil arbeitet, nämlich durch kurzzeitige, vom Sollschaltauslöser (9) ausgelöste Gleichstromerregung der Magnetspule (5) mit einer von zwei möglichen Stromflußrichtungen in eine von zwei Schaltstellungen, nämlich eine Einschaltstellung oder eine Ausschaltstellung, bringbar ist und in der jeweils erreichten Schaltstellung verharrt, insbesondere darin gehalten ist, **dadurch gekennzeichnet**, daß eine Überstromschutzschaltung (13) vorgesehen und mittels der Überstromschutzschaltung (13) bei Auftreten eines Überstromes auf mindestens einem geschalteten Pol (12), der jedoch unterhalb eines Grenz-Überstromes liegt, nach einer bestimmten Verzögerungszeit und bei Auftreten eines den Grenz-Überstrom erreichenden oder überschreitenden Stromes auf mindestens einem geschalteten Pol (12) mit der minimal möglichen zeitlichen Verzögerung eine Gleichstromerregung der Magnetspule (5) in der zum Erreichen der Ausschaltstellung des Magnetankers (4) notwendigen Stromflußrichtung erfolgt.

2. Niederspannungsschaltgerät nach Anspruch 1, dadurch gekennzeichnet, daß die Verzögerungszeit in Abhängigkeit von der Größe des Überstromes gesteuert wird, und zwar desto kürzer ist, je größer der Überstrom ist und/oder daß die minimal mögliche zeitliche Verzögerung in einem Netz von 50 bis 60 Hz maximal 5 ms, vorzugsweise maximal 3 ms beträgt.

3. Niederspannungsschaltgerät nach Anspruch 1 oder 2, dadurch gekennzeichnet, daß eine elektronische Steuerschaltung (14) vorgesehen ist und Schaltspannungsanschlüsse (15, 16), einen Einschalt-Steuereingang (17), einen Ausschalt-Steuereingang (18), einen Einschalt-Ausgang (19) und einen Ausschalt-Ausgang (20) aufweist, daß die Steuereingänge (17, 18) mit dem Sollschaltauslöser (9) verbunden und die Magnetspule (5) zwischen die Ausgänge (19, 20) geschaltet bzw. jeweils eine Magnetspule an einen Ausgang geschaltet ist und daß der Ausschalt-Steuereingang (18) zusätzlich über ein elektronisches Zeitglied (21) an eine vom Strom auf dem geschalteten Pol (12) bzw. den geschalteten Polen (12) gesteuerte Steuerspannungsquelle (22) angeschlossen ist.

4. Niederspannungsschaltgerät nach Anspruch 3, dadurch gekennzeichnet, daß die Steuerschaltung (14) mit elektronischen Leistungs-Schaltelementen, insbesondere mit, vorzugsweise in Emitterschaltung betriebenen Leistungstransistoren (23, 24) ausgerüstet ist und, vorzugsweise, daß die Ausgänge (19, 20) der Steuerschaltung (14) über jeweils ein Leistungs-Schaltelement (23) bzw. (24) mit jedem der Schaltspannungsanschlüsse (15, 16) schaltungstechnisch verbunden und jeweils zwei einander zugeordnete Leistungs-Schaltelemente (23) bzw. (24) durchgeschaltet und die beiden anderen Leistungs-Schaltelemente (24) bzw. (23) gesperrt sind.

5. Niederspannungsschaltgerät nach Anspruch 3 oder 4, dadurch gekennzeichnet, daß das elektronische Zeitglied (21) als RC-Glied, also mit Verzögerungswiderstand (26) und Speicherkondensator (27), ausgeführt ist und, vorzugsweise, daß der Verzögerungswiderstand (26) als Varistor ausgeführt ist oder aus einem Varistor und einem in Reihe oder parallel dazu geschalteten Festwiderstand besteht.

6. Niederspannungsschaltgerät nach einem der Ansprüche 3 bis 5, dadurch gekennzeichnet, daß in Reihe zu dem Zeitglied (21) ein Bauelement mit Spannungs-Schwellwertcharakter, vorzugsweise eine Zenerdiode (28), angeordnet ist und/oder daß der Einschalt-Steuereingang (17) ggf. über einen Begrenzungswiderstand an die Steuerspannungsquelle (22), und zwar an deren nicht mit dem Ausschalt-Steuereingang (18) verbundenen Pol, angeschlossen ist und/oder daß die Steuerspannungsquelle (22) an den geschalteten Polen (12) angeschlossene, vorzugsweise als Hall-Generatoren (30) ausgeführte Stromsensoren sowie Verstärker (31) und ggf. ausgangsseitig Gleichrichter (32) aufweist.

7. Niederspannungsschaltgerät nach einem der Ansprüche 3 bis 6, dadurch gekennzeichnet, daß die Schaltspannungsanschlüsse (15, 16) zu einer Schaltspannungsquelle (33) gehören, die eingangsseitig, vorzugsweise über Gleichrichter (34), an die geschalteten Pole (12) bzw. den geschalteten Pol und einen Gegenpol, angeschlossen ist und, vorzugsweise, ausgangsseitig einen Speicher- und Glättungskondensator (35) aufweist.

8. Niederspannungsschaltgerät nach einem der Ansprüche 1 bis 7, dadurch gekennzeichnet, daß der Magnetspule (5) eine Überspannungsschaltung, vorzugsweise eine Reihenschaltung aus einem Widerstand (39) und einem Überspannungsableiter (40), parallel geschaltet ist.

9. Niederspannungsschaltgerät nach einem der Ansprüche 1 bis 8, dadurch gekennzeichnet, daß der Magnetspule (5) ein topfförmiges Magnetjoch (6) zugeordnet und der Magnetanker (4) als Dauermagnet-Tauchanker ausgeführt ist, daß das Magnetjoch (6) zwei Polenden (42) in Bewegungsrichtung des Magnetankers (4) sowie zwei Polenden (43) quer dazu in der Mitte zwischen den beiden anderen Polenden (42) aufweist und daß die in Bewegungsrichtung befindlichen Polenden (42) jeweils gleiche Polarität, die anderen Polenden (43) jeweils den in Bewegungsrichtung befindlichen Polenden (42) entgegengerichtete Polarität aufweisen.

10. Niederspannungsschaltgerät nach einem der Ansprüche 1 bis 9, dadurch gekennzeichnet, daß der Magnetanker (4) auch direkt mechanisch von Hand betätigbar ist und daß dazu, vorzugweise, ein im normalen Betrieb mit dem Magnetanker (4) nicht gekuppelter, aber bedarfsweise kuppelbarer Handgriff vorgesehen ist.

# Fig.1

Fig. 2

**Fig. 3**